# EUROPÄISCHE PATENTANMELDUNG

(11) **EP 1 655 579 A1**
(43) Veröffentlichungstag der Anmeldung: **10.05.2006**
(21) Anmeldenummer: 05022635.6
(22) Anmeldetag: 18.10.2005
(51) Int. Cl.: G01D 5/14, F02D 11/10

(54) **Magnetischer Winkelsensor mit Magnetquadern**

(30) Priorität: 06.11.2004 DE 102004053703
(71) Anmelder: Pierburg GmbH, 41460 Neuss (DE)
(72) Erfinder: Peiffer, Christoph, 41363 Jüchen (DE); Bürger, Frank, 52355 Düren (DE)
(74) Vertreter: Ter Smitten, Hans

(57) **Zusammenfassung**

Die vorliegende Erfindung betrifft eine Stellvorrichtung für Verbrennungskraftmaschinen, bei der erfindungsgemäß zur Detektierung der Drehwinkellage eines Stellorgans zwei Magnetquader (24, 25) mit einem berührungslosen Sensor (23) kommunizieren. Die Magnetquader (24, 25) sind so polarisiert, dass jeweils der entgegensetzte Pol der Magnetquader (24, 25) in Richtung zum berührungslosen Sensor (23) weist, so dass eine im wesentlichen stetige und linearisierbare resultierende Magnetfeldkennlinie entsteht. Hierdurch wird ein genaue Drehwinkelerfassung durch den berührungslosen Sensor (23) ermöglicht.

Eine derartige Vorrichtung weist eine kleine Bauform auf, wobei ein axialer Versatz zwischen Magnetquader (24, 25) und berührungslosem Sensor (23) kaum Signaländerungen hervorruft. Des weiteren weisen diese Magnetquader (24, 25) eine geringe Degradation auch bei Temperatureinfluss auf. Bei entsprechender anordnung der Magnetquader eignet sich eine derartige Stellvorrichtung auch für einen 360°-Steller.

## Beschreibung

Die Erfindung betrifft eine Stellvorrichtung für eine Verbrennungskraftmaschine mit einem Gehäuse, in dem ein Antriebsmotor angeordnet ist, der eine Abtriebswelle zumindest indirekt antreibt, wobei zumindest ein Magnet in funktionaler Verbindung zu einem feststehend im Gehäuse angeordneten berührungslosen Sensor, insbesondere einem Hall-Sensor, steht und in fest vorgegebener Position zur Abtriebswelle und mit dieser bewegbar angeordnet ist, so dass bei Bewegung des Magneten der berührungslose Sensor eine Magnetfeldänderung detektiert und ein Signal erzeugt, welches eine Steuereinrichtung zur Bestimmung der Drehwinkellage der Abtriebswelle verarbeitet.

Derartige Stellvorrichtungen sind allgemein bekannt und werden in einer Vielzahl von Anmeldungen beschrieben. Sie werden zumeist zur Verstellung von Stellorganen, wie beispielsweise von Drosselklappen, Tumble-, Drall- oder Schaltklappen in Verbrennungsmotoren verwendet, wobei die Stellorgane entweder direkt auf der Abtriebswelle angeordnet oder indirekt über Hebel oder Gestänge mit der Abtriebswelle verbunden sind.

So wird in der DE 101 00 966 eine Stellvorrichtung für ein Stellorgan beschrieben, welches auf einer Abtriebswelle angeordnet ist, die von einem Elektromotor zur Winkelverstellung angetrieben wird. Auf der Abtriebswelle oder mit der Abtriebswelle verbunden, ist ein segmentierter Magnet angeordnet, der derart mit einem feststehenden Hall-Sensor kommuniziert, dass dieser jeden Polübergang Nord-Süd beziehungsweise Süd-Nord detektiert, wodurch eine Drehwinkellagebestimmung der Abtriebswelle beziehungsweise des Stellorgans möglich wird. Eine derartige Vorrichtung weist jedoch den Nachteil auf, dass nur bestimmte Winkelabschnitte detektierbar sind und keine kontinuierliche Messung über den gesamten Winkelbereich möglich ist.

In der DE 103 21 653 wird eine Stellvorrichtung beschrieben, bei der ein Elektromotor eine Schnecke antreibt, die mit einem Zahnradsegment zusammen wirkt, welches wiederum auf einer Abtriebswelle angeordnet ist, die mit einem Stellorgan in Verbindung steht. Am Zahnradsegment sind zwei gegensätzlich polarisierte Stiftmagnete angeordnet, die mit einem Hall-Sensor kommunizieren. Eine derartige Vorrichtung ist jedoch lediglich geeignet um zwei Endstellungen anzufahren, da keine kontinuierliche auswertbare Magnetenkennlinie vom Sensor detektiert werden kann. Stellvorrichtungen mit Magnetstiften müssen des weiteren mit geringen Toleranzen bezüglich der axialen Position der Magnetstifte zum Sensor gefertigt werden, da ein Versatz in axialer Richtung zwischen Magnetstift und Hall-Sensor zu großen Änderungen in der detektierten Feldstärke führt.

Des weiteren ist es bekannt, diametrale Ring- oder Teilringmagnete für Stellvorrichtungen einzusetzen. Derartige Magnete werden beispielsweise in der DE 101 23 605 beschrieben. Diese haben den Vorteil, dass die Feldabwicklung also die Magnetenkennlinie einen linearen Verlauf aufweist, so dass vom Hall-Sensor jede beliebige Position der Abtriebswelle detektierbar ist. Der Nachteil derartiger Magnete ist, insbesondere wenn sie als Teilringmagnete ausgeführt sind, der relativ hohe Verschleiß also die Degradation des Magneten, wodurch Fehlsignale des Hall-Sensors entstehen, da die Magnetfeldstärke bei einer bestimmten Drehstellung der Abtriebswelle mit der Zeit geringer wird. Diese Degradation wird durch große Temperaturschwankungen verstärkt. Vollständig geschlossene Ringmagnete weisen zwar eine geringere Degradation auf, haben jedoch den Nachteil, dass sie einen größeren Raum benötigen, so dass die Baugröße der Stellvorrichtung erhöht werden muß. Des weiteren sind all diese Ausführungen nicht geeignet über einen Drehwinkelbereich von 360° kontinuierlich alle Positionen anzufahren.

Die US 2002/0118011 A1 beschreibt verschiedene Sensorsysteme mit je zwei Magneten, zwischen denen ein berührungsloser Sensor, vorzugsweise ein Hall-Sensor, angeordnet ist, wobei der Sensor und die Magnete zwischen zwei Flussblechen angeordnet sind. Durch die Anordnung zwischen den Magneten und den Flussblechen wird hier jedoch die mögliche Bewegung des zu detektierenden Objektes eingeschränkt.

Daher ist es Aufgabe der Erfindung, eine Stellvorrichtung mit zumindest einem Magneten und einen mit diesem kommunizierenden Hall-Sensor zu schaffen, bei der möglichst keine Degradation auftritt, eine hohe Toleranz- und Temperaturunempfindlichkeit besteht und gleichzeitig ein geringer Bauraum benötigt wird. Vorzugsweise soll eine Verstellung über 360° möglich sein.

Diese Aufgabe wird dadurch gelöst, dass zwei Magnetquader in fest vorgegebener Position zur Abtriebswelle angeordnet sind und in funktionaler Verbindung zum berührungslosen Sensor stehen, wobei eine zum Sensor weisende Fläche des ersten Magnetquaders eine entgegengesetzte Polarität aufweist als eine zum Sensor weisende Fläche des zweiten Magnetquaders. Da es sich jeweils um einen in sich geschlossenen Magneten handelt, welcher einen Nord- und einen Südpol aufweist, entsteht nur geringe Degradation, wobei gleichzeitig nur ein sehr geringer Bauraum benötigt wird. Des weiteren weisen die Magnete eine resultierende Magnetfeldkennlinie auf, welche zwar nicht vollständig linear aber doch stetig und linearisierbar ist, so dass jede Drehwinkellage bei ausreichender programmierter Stützstellenzahl im Hall-Sensor eindeutig detektierbar ist. Auch ein axialer Versatz zwischen den Magneten und dem Hall-Sensor bewirkt nur geringe Änderungen des detektierten Magnetfeldes, so dass keine genauen Toleranzwerte beim Einbau berücksichtigt werden müssen.

Um eine optimal auswertbare Magnetkennlinie zu erhalten ist der Abstand vom Sensor zur Abtriebswelle größer als der Abstand der Magnetquader zur Abtriebswelle und der Sensor und die Magnete sind im wesentlichen in einer gemeinsamen Ebene angeordnet, welche senkrecht zur Abtriebswelle angeordnet ist.

Um eine über den gesamten Drehwinkelbereich regelbare Stellvorrichtung zu schaffen ist der Sensor ein programmierbarer Sensor, der mit einer Steuereinrichtung korrespondiert, über welche der Elektromotor ansteuerbar ist.

In einer bevorzugten Ausführungsform sind die Magnetquader in einem Winkel zu einer Drehachse der Abtriebswelle angeordnet, der im wesentlichen dem Verstellwinkel zwischen den Endlagen der Abtriebswelle entspricht, wodurch die Stetigkeit der resultierenden Magnetfeldkennlinie über den gesamten zu verstellenden Bereich gewährleistet wird.

Vorzugsweise weist die Stellvorrichtung eine Getriebeeinheit auf, welche über eine Antriebswelle des Antriebsmotors, auf der ein erstes Getrieberad angeordnet ist, antreibbar ist, wobei das letzte Getrieberad als Zahnradsegment ausgeführt ist, welches auf der Abtriebswelle des Stellorgans zumindest drehfest angeordnet ist und auf dem die Magnetquader befestigt sind. Eine derartige Ausführung minimiert den benötigten Bauraum.

In einer weiterführenden Ausführungsform weist das Zahnradsegment zwei Aufnahmen auf, in welche die zwei Magnetquader formschlüssig einsteckbar sind, wodurch die benötigte Montagezeit minimiert werden kann.

In einer alternativen Ausführung weist die Stellvorrichtung eine Getriebeeinheit auf, welche über eine Antriebswelle des Antriebsmotors, auf der ein erstes Getrieberad angeordnet ist, antreibbar ist, wobei das letzte Getrieberad als Vollkreiszahnrad ausgeführt ist, das auf der Abtriebswelle zumindest drehfest angeordnet ist, und auf dem die Magnetquader in einem Winkel von 180° zueinander versetzt befestigt sind. Hierdurch wird ein 360° Steller geschaffen, da jeder Winkelstellung der Welle genau ein Signal des Sensors zugeordnet werden kann.

In einer weiterführenden Ausführung ist in der Steuereinrichtung eine Matrix hinterlegt, in welcher jedem Winkel des Vollkreiszahnrades ein Ausgangssignal des Sensors zugeordnet ist, und mittels derer die Drehrichtung des Elektromotors derart bestimmbar ist, dass der Elektromotor in der Drehrichtung des kleineren zu durchfahrenden Drehwinkels zwischen Istwert und Sollwert der nächsten Drehstellung dreht. Durch eine solche Programmierung kann die nächste Drehstellung jeweils in kürzester Zeit angefahren werden.

Es wird somit eine Stellvorrichtung geschaffen, welche bei geringem Bauraumbedarf eine genaue Drehwinkellagenbestimmung ermöglicht, wobei Fehler durch Degradation der Magneten ebenso wie Fehler durch axialen Versatz der Magneten zum Sensor vermieden werden.

Eine bevorzugte Ausführungsform der Erfindung ist in den Zeichnungen dargestellt und wird nachfolgend beschrieben.
Figur 1 zeigt eine Seitenansicht einer erfindungsgemäßen Stellvorrichtung in geschnittener Darstellung.
Figur 2 zeigt eine Draufsicht des letzten Zahnradsegments der Stellvorrichtung aus Figur 1.

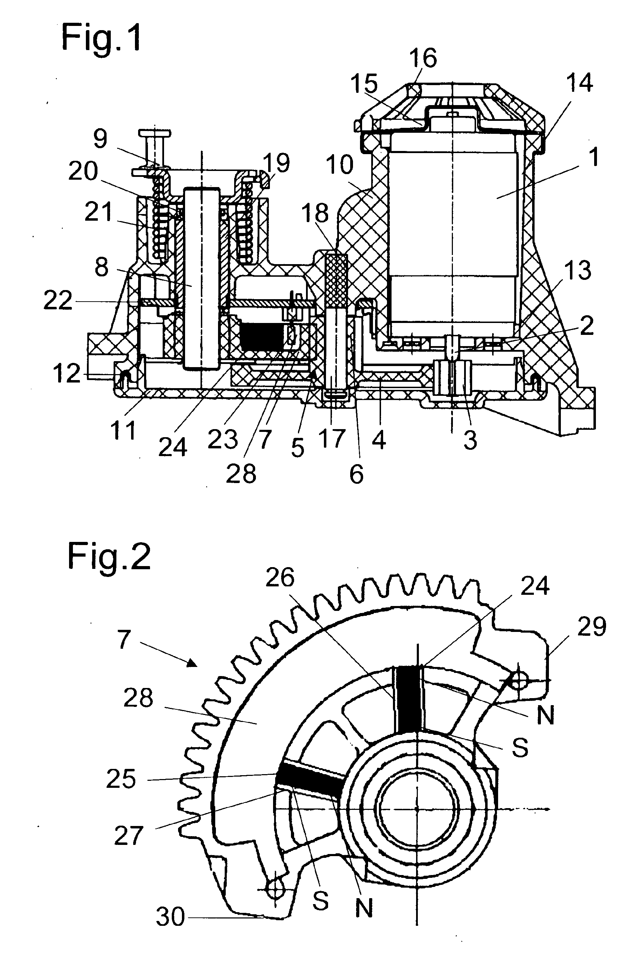

Die in Figur 1 dargestellte Stellvorrichtung besteht aus einem Elektromotor 1, auf dessen Antriebswelle 2 ein erstes Zahnrad 3 angeordnet ist. Dieses Zahnrad 3 kämmt mit einem größeren Zahnrad 4 eines Doppelrades 5. Das zum Doppelrad 5 gehörende kleinere Zahnrad 6 steht wiederum in Eingriff mit einem Zahnradsegment 7, welches auf einer Abtriebswelle 8 angeordnet ist. Im vorliegenden Ausführungsbeispiel ist das Zahnradsegment 7 über ein Laser-Schweiß-Verfahren mit der Abtriebswelle 8 fest verbunden. Die Abtriebswelle 8 treibt bei Betrieb der Stellvorrichtung über einen mit ihr drehfest verbundenen Hebel 9 indirekt ein nicht dargestelltes Stellorgan an.

Die gesamte Getriebeeinheit 2-8 als auch der Elektromotor 1 sind in einem gemeinsamen Gehäuse 10 angeordnet. Dieses Gehäuse 10 wird durch einen Deckel 11 über eine umlaufende Klebefläche 12 dicht verschlossen. Der Elektromotor 1 wird vom entgegengesetzten Ende des Gehäuses 10 in eine Aufnahme 11 gegen einen Anschlag 13 geschoben, der die Aufnahme 14 begrenzt und im Gehäuse 10 ausgebildet ist. Über einen Motordeckel 15 wird der Elektromotor im Gehäuse 10 befestigt und gegen axiales Verschieben gesichert. Anschließend wird von dieser Seite über den Motordeckel 15 und das Gehäuse 10 eine Schutzkappe 16 mittels einer Clipsverbindung am Gehäuse 10 befestigt, so dass das Gehäuse 10 fest verschlossen ist.

Das Doppelrad 5 ist auf einem Achsstift 17 drehbar befestigt, der in einer Bohrung 18 des Gehäuses 10 befestigt ist. Die Abtriebswelle 8 ist in einer Hülse 19 gelagert. Ein dichter Verschluß des Durchtritts der Abtriebswelle 8 aus dem Gehäuse 10 wird in Richtung des Hebels 9 durch einen Lippendichtring 20 erreicht. Die Stellvorrichtung weist des weiteren eine mit der Abtriebswelle 8 beziehungsweise dem Hebel 9 in Kontakt stehende Drehfeder 21 auf, über welche bei Ausfall des Elektromotors 1 das nicht dargestellte Stellorgan in eine Notlaufstellung zurückgedreht wird.

Im Gehäuse 10 ist eine Platine 22 angeordnet, auf der ein Hall-Sensor 23 derart angebracht ist, dass er im wesentlichen in einer Ebene zu zwei Magnetquadern 24, 25 steht, von denen der Magnetquader 24 in Figur 1 zu erkennen ist. Diese gemeinsame Ebene steht senkrecht zur Abtriebswelle 8. Die Magnetquader 24, 25 sind derart auf dem Zahnradsegment 7 angeordnet, dass der Magnet 24 mit seinem Nord- oder Südpol S in Richtung zum Hall-Sensor 23 weist und der entgegensetzte Pol zur Abtriebswelle 8 weist. Der zweite Magnetquader 25 ist bezüglich seiner Pole entgegengesetzt angeordnet. Durch diese Anordnung entsteht in der gemeinsamen Ebene der Magnete 24, 25 und des Hall-Sensors 23 in ausreichendem Abstand zu den Magneten 24, 25 und im Winkelbereich zwischen den Magneten 24, 25 ein Magnetfeld, welches im wesentlichen dem Magnetfeld eines diametral magnetisierten Teilringmagneten entspricht.

In der Figur 2 ist das Zahnradsegment 7 in einer Seitenansicht dargestellt. Die beiden Magnetquader 24, 25 sind jeweils formschlüssig in eine Aufnahme 26, 27 des Zahnradsegments 7 gesteckt und können dort gegebenenfalls festgeklebt werden. Während der Magnetquader 24 im vorliegenden Ausführungsbeispiel mit seinem Südpol S in Richtung zur Abtriebswelle 8 zeigt, zeigt der Nordpol N des Magnetquaders 25 in Richtung zur Abtriebswelle 8. Das Zahnradsegment 7 weist des weiteren eine Ausnehmung 28 auf, welche zumindest über den zu verstellenden Winkelbereich verläuft und durch die sich bei Drehung des Zahnradsegmentes 7 der Hall-Sensor 23 bewegt. Des weiteren ist zu erkennen, dass das Zahnradsegment 7 zwei Anschlagflächen 29, 30 an seinen beiden diametralen Enden aufweist, die mit im Gehäuse 10 ausgebildeten Anschlagflächen derart korrespondieren, dass die Endstellungen des Stellorgans festgelegt werden.

In einer alternativen Ausführung wird das Zahnradsegment 7 als Vollkreiszahnrad ausgebildet. Dieses bildet wie das Zahnradsegment 7 das letzte Getrieberad einer erfindungsgemäßen Stellvorrichtung, welche ansonsten ebenso ausgeführt sein kann, wie die in Figur 1 dargestellte, wobei jedoch keine mechanischen Anschläge existieren und entsprechend auch keine Feder zum Anfahren einer Notlaufposition vorhanden ist. Die Magnetquader 24, 25 sind in einem Winkel von 180° zueinander anzuordnen. Die Ausnehmung für den Hall-Sensor 23 und die Anordnung der Pole der Magnetquader 24, 25 ist ebenso wie beim Zahnradsegment 7 ausgeführt. Das in ausreichendem Abstand von den Magneten 24, 25 entstehende magnetische Feld ist ähnlich dem eines einzelnen Stabmagneten, so dass die Magnetfeldkennlinie einen im wesentlichen sinusförmigen Verlauf über einen Drehwinkelbereich von 360° aufweist. Somit ist jeder Drehwinkelstellung der Abtriebswelle 8 genau ein Sensorsignal zuzuordnen. Eine derartige Anordnung eignet sich demzufolge für einen 360° Steller.

Wird nun das Zahnradsegment 7 oder das Vollkreiszahnrad gedreht, so ändert sich die auf den Hall-Sensor 23 wirkende resultierende Feldstärke der beiden Magnetquader 24, 25, so dass über eine nicht dargestellte Steuerelektronik, die genaue Drehwinkelstellung des Stellorgans detektiert werden kann. Da die Magnetkennlinie, welche als Maß für die Winkellage dient, nicht vollständig linear ist, wird sie durch bekannte Linearisierungsverfahren in eine lineare Kennlinie umgewandelt, so dass jeder vom Hall-Sensor 23 ermittelten Feldstärke eine definierte Drehwinkellage zuzuordnen ist und in einer Matrix abgelegt werden kann. Somit kann nicht nur jede Drehwinkelstellung detektiert werden, sondern auch über die Steuerelektronik der Elektromotor 1 so angesteuert werden, dass eine bestimmte Drehwinkellage angefahren wird. Zusätzlich kann diese Matrix dazu dienen, die Drehrichtung des Elektromotors bei einem 360° Steller derart zu bestimmen, dass jeweils die kürzere Drehrichtung vom Istwert des Drehwinkels zum nächsten anzufahrenden Sollwert gewählt wird.

Diese Baueinheit benötigt nur einen sehr geringen Bauraum und weist gleichzeitig eine hohe Genauigkeit bei der Drehwinkellagebestimmung über eine hohe Lebensdauer auf. Aufgrund des geschlossenen Magnetkreises innerhalb eines Magnetquaders wird Degradation vermieden. Ein axialer Versatz der Magnetquader zum Hall-Sensor bewirkt keine Funktionsbeeinträchtigung der Lageerkennung, da ein solcher Versatz nur sehr geringe Signaländerungen des Hall-Sensors zur Folge hat.

Es sollte klar sein, dass Änderungen bezüglich der Bauform der Stellvorrichtung möglich sind. Insbesondere die Art des verwendeten Elektromotors, des verwendeten berührungslosen Sensors, die Form des Gehäuses sowie die Ausführung des Getriebes sind funktionsabhängig und somit frei veränderbar, ohne den Schutzbereich des Hauptanspruchs zu verlassen.

## Patentansprüche

1. Stellvorrichtung für eine Verbrennungskraftmaschine mit einem Gehäuse, in dem ein Antriebsmotor angeordnet ist, der eine Abtriebswelle zumindest indirekt antreibt, wobei zumindest ein Magnet in funktionaler Verbindung zu einem feststehend im Gehäuse angeordneten berührungslosen Sensor steht und in fest vorgegebener Position zur Abtriebswelle und mit dieser bewegbar angeordnet ist, so dass bei Bewegung des Magneten der berührungslose Sensor eine Magnetfeldänderung detektiert und ein Signal erzeugt, welches eine Steuereinrichtung zur Bestimmung der Drehwinkellage der Abtriebswelle verarbeitet, **dadurch gekennzeichnet, dass** zwei Magnetquader (24, 25) in fest vorgegebener Position zur Abtriebswelle (8) angeordnet sind und in funktionaler Verbindung zum berührungslosen Sensor (23) stehen, wobei eine zum Sensor (23) weisende Fläche des ersten Magnetquaders (24) eine entgegengesetzte Polarität aufweist als eine zum Sensor (23) weisende Fläche des zweiten Magnetquaders (25), wobei der Abstand vom Sensor (23) zur Abtriebswelle (8) größer ist als der Abstand der Magnetquader (24, 25) zur Abtriebswelle (8) und dass der Sensor (23) und die Magnete (24, 25) im wesentlichen in einer gemeinsamen Ebene angeordnet sind, welche senkrecht zur Abtriebswelle (8) angeordnet ist.

2. Stellvorrichtung nach Anspruch 1 oder 2, **dadurch gekennzeichnet, dass** der Sensor ein programmierbarer Sensor (23) ist, der mit einer Steuereinrichtung korrespondiert, über welche der Elektromotor (1) ansteuerbar ist.

3. Stellvorrichtung nach einem der vorhergehenden Ansprüche, **dadurch gekennzeichnet, dass** die Magnetquader (24, 25) in einem Winkel zu einer Drehachse der Abtriebswelle (8) des Stellorgans angeordnet sind, der im wesentlichen dem Verstellwinkel zwischen den Endlagen der Abtriebswelle (8) entspricht.

4. Stellvorrichtung nach einem der vorhergehenden Ansprüche, **dadurch gekennzeichnet, dass** die Stellvorrichtung eine Getriebeeinheit (2-8) aufweist, welche über eine Antriebswelle (2) des Antriebsmotors (1), auf der ein erstes Getrieberad (3) angeordnet ist, antreibbar ist, wobei das letzte Getrieberad als Zahnradsegment (7) ausgeführt ist, das auf der Abtriebswelle (8) zumindest drehfest angeordnet ist, und auf dem die Magnetquader (24, 25) befestigt sind.

5. Stellvorrichtung nach Anspruch 5, **dadurch gekennzeichnet, dass** das Zahnradsegment (7) zwei Aufnahmen (26, 27) aufweist, in welche die zwei Magnetquader (24, 25) formschlüssig einsteckbar sind.

6. Stellvorrichtung nach einem der Ansprüche 1 bis 3, **dadurch gekennzeichnet, dass** die Stellvorrichtung eine Getriebeeinheit (2-8) aufweist, welche über eine Antriebswelle (2) des Antriebsmotors (1), auf der ein erstes Getrieberad (3) angeordnet ist, antreibbar ist, wobei das letzte Getrieberad als Vollkreiszahnrad ausgeführt ist, das auf der Abtriebswelle (8) zumindest drehfest angeordnet ist, und auf dem die Magnetquader (24, 25) in einem Winkel von 180° zueinander versetzt befestigt sind.

7. Stellvorrichtung nach Anspruch 7, **dadurch gekennzeichnet, dass** in der Steuereinrichtung eine Matrix hinterlegt ist, in welcher jedem Winkel des Vollkreiszahnrades ein Ausgangssignal des Sensors (23) zugeordnet ist, und mittels derer die Drehrichtung des Elektromotors (1) derart bestimmbar ist, dass der Elektromotor (1) in der Drehrichtung des kleineren zu durchfahrenden Drehwinkels zwischen Istwert und Sollwert der nächsten Drehstellung dreht.
